# EUROPEAN PATENT APPLICATION

(11) **EP 4 596 730 A1**
(43) Date of publication of application: **06.08.2025**
(21) Application number: 24863854.6
(22) Date of filing: 22.05.2024
(51) Int. Cl.: C22B 3/08, C22B 3/22, C22B 7/00, H01M 10/54

(54) **METHOD FOR RECOVERY OF VALUABLE METALS**

(30) Priority: 15.12.2023 KR 20230182839
(71) Applicant: Korea Zinc Co., Ltd., Seoul 06110 (KR); Kemco, Seoul 06110 (KR)
(72) Inventor: KIM, Seung Hyun, Ulsan 44536 (KR); LEE, Hyun, Ulsan 44650 (KR); LEE, Je Joong, Seoul 06041 (KR)
(74) Representative: Angerhausen, Christoph
(86) International application number: PCT/KR2024/006899
(87) International publication number: WO 2025/127268

(57) **Abstract**

A method for recovery of valuable metals according to the present disclosure comprises the steps of: (S1) leaching a sulfate solution from waste battery material; (S2) adding a phosphorus compound to the sulfate solution to precipitate aluminum phosphate; and (S3) isolating the aluminum phosphate from the sulfate solution through solid-liquid separation, wherein the sulfate solution contains metal sulfate at a concentration of 90 g/L or higher.

## Description

### TECHNICAL FIELD

The present disclosure relates to a method for recovery of valuable metals and, more specifically, to a method for recovering valuable metals from waste batteries.

### BACKGROUND

Recently, with the expansion of the battery electric vehicle (BEV) market, the demand for secondary batteries is increasing. Defective waste battery scraps or waste cathode materials produced during the manufacturing process of secondary batteries, or waste secondary battery scraps discarded after use contain valuable metals such as nickel, cobalt, and manganese. There has been active development of technologies for recovering and recycling these valuable metals from secondary batteries.

Valuable metals like nickel, cobalt, and manganese can be recovered by dissolving the materials of secondary batteries in acid and then using a solvent extraction method. The solvent extraction method is based on the principle where metal ions are extracted from an aqueous solution to an organic solvent. Generally, when recovering valuable metals from secondary battery materials using the solvent extraction method, a process to remove impurities contained in the secondary battery materials is required. Typical examples of such impurities include aluminum or copper. However, the process byproducts generated during the impurity removal process may lead to high discard rates of valuable metals, consequently lowering the recovery rate of valuable metals.

### SUMMARY

The present disclosure aims to provide a method for recovery of valuable metals from waste batteries, whereby the loss rate of valuable metals is minimized while increasing the removal rate of aluminum and reducing the recovery time.

A method for recovery of valuable metals according to the present disclosure includes the steps of: (S1) leaching a sulfate solution from waste battery material; (S2) adding a phosphorus compound to the sulfate solution to precipitate aluminum phosphate; and (S3) isolating the aluminum phosphate from the sulfate solution through solid-liquid separation, wherein the sulfate solution contains metal sulfate at a concentration of 90 g/L or higher.

In the method for recovery of valuable metals according to the present disclosure, the sulfate solution contains aluminum at a concentration of 1 g/L or higher.

In the method for recovery of valuable metals according to the present disclosure, the metal sulfate may be at least one sulfate selected from the group consisting of nickel, cobalt, manganese, lithium, copper, and aluminum.

In the method for recovery of valuable metals according to the present disclosure, the step (S1) may include a step of roasting crushed waste batteries without solvent treatment. The step (S1) may include a step of recovering lithium using deionized water without carbon dioxide.

In the step (S2) of the method for recovery of valuable metals according to the present disclosure, the phosphorus compound may be added in an amount of 0.1 % to 7.0 % by weight, based on the weight of the sulfate solution.

In the method for recovery of valuable metals according to the present disclosure, the molar ratio of the phosphorus contained in the added phosphorus compound to the aluminum contained in the sulfate solution (P/Al molar ratio) may be 0.92 to 1.72.

In the method for recovery of valuable metals according to the present disclosure, the phosphorus compound may be sodium phosphate.

In the method for recovery of valuable metals according to the present disclosure, the step (S2) may last 2 to 8 hours. The step (S2) may be carried out at a temperature of 25°C to 95°C. The sulfate solution in the step (S2) may have a pH of 2.0 to 5.0.

In the method for recovery of valuable metals according to the present disclosure, at least 96.0 % by weight of the aluminum contained in the sulfate solution may be precipitated and removed as aluminum phosphate.

The method for recovery of valuable metals according to the present disclosure may further include a step (S4) of removing phosphorus contained in the sulfate solution. The sulfate solution in the step (S4) has a pH of 5.0 or higher.

Recently, there has been a trend to reduce the process of separating and sorting aluminum foil from waste batteries in order to increase the recovery rate of valuable metals contained in batteries. As a result, the battery material extracted from waste batteries contains a high concentration of aluminum, which is considered an impurity. Conventionally, aluminum was precipitated and removed as a by-product in the form of aluminum hydroxide by reacting the aluminum contained in the leachate of the battery material with a hydroxide source. However, when the leachate contains a high concentration of aluminum, the addition of the hydroxide source precipitates the valuable metals to be recovered in the form of hydroxides, thereby reducing the recovery rate of valuable metals.

To solve this problem, a phosphate compound is added instead of a hydroxide source to a sulfate solution containing metal sulfate at a concentration of 90 g/L or more according to the present disclosure, whereby even when the battery material contains a high concentration of aluminum, the loss rate of the metals to be recovered can be minimized, the removal rate of aluminum can be increased, and the time required for the aluminum removal process can be reduced. As a result, the present disclosure secures the diversity of treatable battery materials, thus finding advantageous applications in waste battery treatment technologies targeting medium to large battery packs and in the electric vehicle field.

### BRIEF DESCRIPTION OF THE DRAWINGS

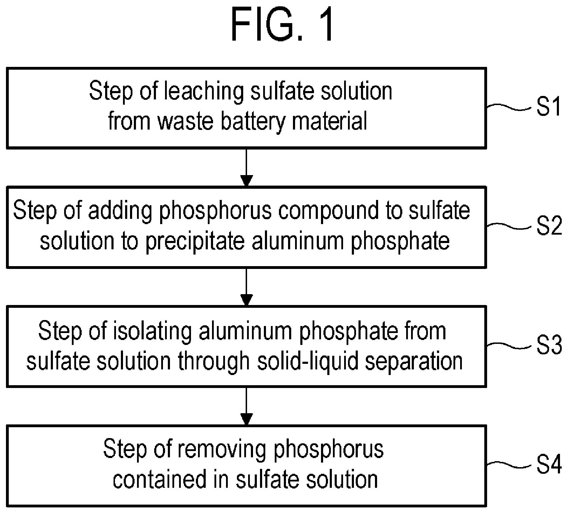

FIG. 1 is a process diagram of the method for recovering valuable metals according to the present disclosure.

### DETAILED DESCRIPTION

Hereinafter, specific contents for carrying out the present disclosure will be described in detail with reference to the accompanying drawings. However, in the following description, if there is a risk of unnecessarily obscuring the gist of the present disclosure, detailed descriptions of well-known functions or configurations will be omitted.

In the accompanying drawings, the same or corresponding components are assigned the same reference numerals. In addition, in the description of the embodiments below, overlapping description of the same or corresponding components may be omitted. However, even if descriptions regarding components are omitted, it is not intended that such components are not included in any embodiment.

Terms used in the present disclosure will be briefly described, and the disclosed embodiments will be described in detail. Terms used in this specification have been selected as currently widely used general terms as possible while considering the functions in the present disclosure, but these may vary depending on the intention or precedent of a person skilled in the art, the emergence of new technology, and the like. In addition, in a specific case, there is a term arbitrarily selected by the applicant, and in this case, the meaning will be described in detail in the description of the corresponding disclosure. Therefore, the terms used in the present disclosure should be defined based on the meaning of the term and the content throughout the present disclosure, rather than the simple name of the term.

Expressions in the singular in this disclosure include plural expressions unless the context clearly dictates the singular. Also, the plural expression includes the singular expression unless the context clearly dictates the plural.

In the entirety of the present disclosure, when a part 'includes' a certain component, it means that other components may be further included, rather than excluding other components, unless otherwise stated.

Reference to "A and/or B" in this specification means A, or B, or A and B.

Advantages and features of the disclosed embodiments, and methods of achieving them, will become apparent with reference to the embodiments described below in conjunction with the accompanying drawings. However, the present disclosure is not limited to the embodiments disclosed below, but may be implemented in various different forms, and only the present embodiments allow the present disclosure to be complete, and the present disclosure provides those skilled in the art with the scope of the invention. It is provided for complete information only.

A method for recovery of valuable metals according to the present disclosure includes the steps of: (S1) leaching a sulfate solution from a waste battery material; (S2) adding a phosphorus-based compound to a sulfate solution to precipitate aluminum phosphate; and (S3) isolating aluminum phosphate from the sulfate solution through solid-liquid separation, wherein the sulfate solution contains metal sulfate at a concentration of 90 g/L or higher.

Hereinafter, each step of the method for recovery of valuable metals according to the present disclosure will be described in more detail with reference to the drawing. FIG. 1 is a process diagram of the method for recovery of valuable metals according to the present disclosure. As shown in FIG. 1, the method for recovery of valuable metals includes the steps of (S1) leaching a sulfate solution from waste battery materials, (S2) adding a phosphate compound to the sulfate solution to precipitate aluminum phosphate, and (S3) isolating aluminum phosphate from the sulfate solution through solid-liquid separation, and optionally further includes a step of (S4) removing phosphorus contained in the sulfate solution.

### Step of Leaching of Sulfate Solution from Waste Battery Materials (S1)

The method for recovery of valuable metals according to the present disclosure initiates with the step (S1) of leaching a sulfate solution from waste battery materials. For instance, the step (S1) may be a step of recovering waste battery materials to leach a sulfate solution. Alternatively, the step (S1) can be a process of leaching a sulfate solution from at least one selected from the group consisting of nickel ore, nickel MHP (Mixed Hydroxide Precipitate), and nickel oxide, instead of waste battery materials.

Waste battery materials can be recovered through a pre-treatment process of the waste batteries. This pre-treatment may include a discharging process, a dismantling process, a crushing/grinding process, a drying process, and a roasting process.

The discharging process is a process to discharge the accumulated power in the waste batteries to prevent any explosion during subsequent processes. The discharging process can be accomplished through mechanical discharge using a discharger or saltwater discharge using brine.

The dismantling process involves breaking down the pack form of waste batteries into modules and/or cell units. The dismantling process may be performed after the discharging process, but without limitations thereto; dismantling can precede discharging. For example, dismantling can be carried out using automated dismantling equipment.

The crushing/grinding process is a process to turn the dismantled waste batteries into crushed and ground form. To prevent sparks and explosions, the crushing/grinding process may be performed under a nitrogen atmosphere while spraying water. After the crushing and grinding, the sprayed water and electrolyte flowed out from the batteries can be removed, for example, through centrifugal separation using a rotary barrel.

The drying process is to remove the remaining water and electrolyte after the crushing/grinding process. For instance, the drying process can be carried out by heating the crushed materials in a dryer with nitrogen gas heated to about 50°C or higher.

The roasting process is a process to treat crushed/ground batteries by roasting. Typically, processes such as roasting, metal oxide addition, and binder addition are conducted in the manufacture of cathode materials for battery performance enhancement. As a result, the waste battery materials containing the cathode materials may include various oxides of valuable metals and impurities, which could hinder the recycling of waste batteries for the recovery of valuable metals. To eliminate these hindrances, roasting at high temperatures can be performed. The roasting process could be an inert atmospheric roaster (IAR) process, where crushed/ground batteries are reduced and roasted in an inert gas atmosphere. For example, in the roasting process, the crushed/ground batteries could be reduced and roasted at temperatures between 800°C to 900°C for 1 hour to 3 hours under a nitrogen atmosphere.

The roasting process of the present disclosure may omit separate solvent treatment for the removal of binders contained in waste battery materials. By calcining waste batteries in a reduction atmosphere without separate solvent treatment, binders can be removed, simplifying the roasting process. Furthermore, in the roasting process of the present disclosure, metallic materials in oxide form that are combined with oxygen inside the waste batteries can be reduced. Specifically, during the reduction roasting of crushed/ground batteries, some higher oxides (Me₂O₃, where Me = Ni, Co, Mn) can be reduced to lower oxides (MeO, where Me = Ni, Co, Mn), thereby reducing the amount of reagents (H₂O₂, hydrogen peroxide) required during the leaching of sulfate solutions.

Examples of waste battery materials include, but are not limited to, waste battery scrap, black mass processed from waste batteries through recycling processes, waste cathode materials generated during the cathode material manufacturing process, or a combination thereof.

Waste battery materials may contain one or more metal oxides. For instance, the metal oxide contained in the waste battery materials may be one or more selected from the group consisting of lithium cobalt oxide (LiCoO₂), lithium nickel cobalt manganese oxide (LiNiCoMnO₂), lithium manganese oxide (LiMnO₂), and lithium iron phosphate (LiFePO₄).

In the step (S1), the sulfate solution may be extracted from waste battery materials through a wet process. For example, the sulfate solution could be leached from waste battery materials recovered through the aforementioned pre-treatment process. To improve the solubility of the cake during leaching of the sulfate solution, a small amount of reducing agent may be added. In this regard, hydrogen peroxide (H₂O₂) may be used as a reducing agent.

According to an embodiment of the present disclosure, step (S1) may be conducted through a pre-separation process and a leaching process.

The pre-separation process involves adding water to crushed/ground waste batteries to leach and pre-separate lithium (Li). For instance, in the lithium pre-separation process, crushed batteries can be dissolved in water and leached at 10°C to 30°C for 1 hour to 3 hours to produce a lithium carbonate (Li₂CO₃) solution and separate a cake. When leaching a sulfate solution from the cake which remains after pre-separation of lithium from waste battery materials, the use of reagents like hydrogen peroxide can be minimized, and stable process management in continuous operations is achievable. In the pre-separation process of the present disclosure, deionized water may be used to recover lithium without carbon dioxide (CO₂). Recovery of lithium using only deionized water without CO₂ can reduce process costs and decrease the carbon footprint.

The leaching process is a process for leaching a sulfate solution from the cake produced by the pre-separation process. Specifically, in the leaching process, the cake generated from the pre-separation process may be reductively leached with sulfuric acid and hydrogen peroxide (H₂O₂) at 80°C to 85°C for 1 hour to 8 hours.

The metal sulfate contained in the sulfate solution may be at least one sulfate selected from the group consisting of nickel, cobalt, manganese, lithium, copper, and aluminum.

The concentration of metal sulfates in the sulfate solution may be 90 g/L or higher, specifically between 90 g/L to 140 g/L, and more specifically between 90 g/L to 120 g/L. If the concentration of metal sulfates is below 90 g/L, the efficiency of impurity removal reactions in the sulfate solution decreases, lowering the loss rate of valuable metals intended for recovery from the metal sulfates. However, due to the relatively lower concentration of metal sulfates, the amount of valuable metals recovered decreases, resulting in a longer duration required to recover a significant amount of valuable metals through waste battery recycling.

The concentration of aluminum contained in the sulfate solution can be 1 g/L or more, specifically 3 g/L or more, and even more specifically between 3 g/L to 10 g/L. When the concentration of aluminum in the sulfate solution is high, as mentioned above, adding a hydroxide source for aluminum removal causes the precipitation of valuable metals in the form of hydroxides, thus decreasing the recovery rate of valuable metals. Conversely, as described in the subsequent step (S2), adding a phosphorus compound instead of a hydroxide source for aluminum removal can minimize the loss rate of valuable metals while increasing the removal rate of aluminum.

### Step of Adding Phosphorus Compounds to Sulfate Solution to Precipitate Aluminum Phosphate (S2)

Step (S2) is a process to remove aluminum (Al) impurity from the leached sulfate solution. Specifically, in step (S2), a phosphorus compound may be added to the leached sulfate solution to precipitate aluminum phosphate.

The amount of phosphorus compound added may be between 0.1 weight% to 7.0 weight%, more specifically between 0.3 weight% to 5.0 weight%, and even more specifically between 0.3 weight% to 4.8 weight% relative to the weight of the sulfate solution. If the weight ratio of the added phosphorus compound to the sulfate solution falls within these ranges, it can prevent the issues associated with increased process volume and size of process equipment due to the addition of phosphorus compounds, which could decrease the efficiency and economy of the process.

The molar ratio of phosphorus (P) to aluminum (Al) contained in the sulfate solution (P/Al molar ratio) may be between 0.92 to 1.72, more specifically between 0.92 to 1.49, and even more specifically between 1.15 to 1.49. If the molar ratio of phosphorus to aluminum satisfies these ranges, the concentration of phosphorus (P) in the sulfate solution after the precipitation reaction can be reduced to 5 ppm or less.

The phosphorus compound may be one or more selected from the group consisting of sodium phosphate (Na₃PO₄) and phosphoric acid (H₃PO₄), but is not limited thereto. Preferably, the phosphorus compound in the present disclosure can be sodium phosphate. When sodium phosphate is added to remove aluminum contained in the sulfate solution, no free acid is generated in the aluminum phosphate precipitation reaction, significantly reducing the amount of neutralizing agent required. Moreover, sodium phosphate is relatively cheaper compared to other phosphorus compounds. As a result, applying the valuable metal recovery method of the present disclosure to waste battery recycling technology can significantly reduce process time and cost.

In step (S2), aluminum can be precipitated as an aluminum phosphate (AlPO₄) compound through reactions such as [Reaction Equation 1] or [Reaction Equation 2].

[Reaction Equation 1] Al₂(SO₄)₃ + 2Na₃PO₄ -> 2AlPO₄↓ + 3Na₂SO₄

[Reaction Equation 2] Al₂(SO₄)₃ + 2H₃PO₄ + 6NaOH -> 2AlPO₄↓+ 3Na₂SO₄ + 6H₂O

Step (S2) may last for 2 to 8 hours, specifically 2 to 6 hours, and more specifically 2 to 4 hours. When the duration of step (S2) falls within these ranges, it is possible to increase the removal rate of impurities such as aluminum, while minimizing the loss rate of valuable metals in the sulfate solution.

Step (S2) may proceed at temperatures ranging from 25°C to 95°C, specifically 45°C to 95°C, and more specifically 60°C to 90°C. When the temperature in step (S2) satisfies these ranges, it is possible to increase the removal rate of aluminum without increasing the loss rate of valuable metals in the sulfate solution.

During step (S2), the pH of the sulfate solution may be between 2.0 to 5.0, specifically 2.0 to 3.5, and more specifically 2.5 to 3.5. If the pH of the sulfate solution in step (S2) satisfies these ranges, it is possible to increase the removal rate of aluminum while preventing the issue of increased loss rate of nickel due to precipitation as compounds.

In step (S2), the aluminum contained in the sulfate solution may be precipitated by 96.0 % by weight or higher, specifically 97.0 % by weight or higher, and more specifically 98.0 % by weight or higher, and removed as aluminum phosphate. Consequently, sufficient removal of aluminum from the sulfate solution can significantly reduce the content of impurities in the recovered valuable metals.

### Step of Isolating Aluminum Phosphate from Sulfate Solution through Solid-Liquid Separation (S3)

Step (S3) is to separate the aluminum phosphate precipitated in step (S2) from the sulfate solution. Specifically, step (S3) is adapted for recovering the precipitated aluminum phosphate and separating the sulfate solution by decantation. The sulfate solution recovered by separation in step (S3) may be a solution containing the target valuable metals, with aluminum removed therefrom.

The sulfate solution filtered in step (S3) may be transferred to a phosphorus removal process (e.g., step (S4)), and the precipitated aluminum phosphate may be disposed of or stored separately.

### Step of Removing Phosphorus Contained in Sulfate Solution (S4)

Step (S4) is to remove phosphorus (P) remaining in the sulfate solution. Specifically, step (S4) involves adding aluminum sulfate (Al₂(SO₄)₃) to the sulfate solution processed through steps (S1) to (S3) to remove phosphorus. For instance, phosphorus contained in the sulfate solution can be precipitated and removed, along with iron (Fe) and other impurities, by adding aluminum sulfate and sodium hydroxide (NaOH) to adjust the pH to 5.0 or above, specifically pH 5 to 6 and reacting at 50°C to 70°C for 4 to 8 hours.

While some of the targeted valuable metals may precipitate as residue in step (S4), reintroducing this precipitate to the waste battery material in step (S1) can prevent the loss of valuable metals in step (S4).

The pH of the sulfate solution in step (S4) may be 5 or above, specifically 5 to 6, and more specifically 5.5 to 6. When the pH of the sulfate solution in step (S4) satisfies these ranges, aluminum (Al) introduced in excess relative to phosphorus (P) can be precipitated and removed as aluminum hydroxide (Al(OH)₃).

After undergoing steps (S1), (S2), and (S3), and optionally step (S4), valuable metals can be recovered from the sulfate solution through conventional methods, such as solvent extraction.

Hereinafter, examples of the present disclosure will be described in detail so that those skilled in the art can easily carry out the present disclosure. The present disclosure can, however, be embodied in many different forms and is not limited to the examples set forth herein.

### EXAMPLES AND COMPARATIVE EXAMPLES

### EXAMPLE 1

In Example 1, valuable metals were recovered from waste batteries through the steps described in the foregoing. The detailed conditions for each step are as follows:

### Step (S1)

According to the pretreatment process, waste battery materials were recovered through discharge, dismantling, crushing/grinding, drying, and roasting processes. A sulfate solution was extracted from the recovered waste battery materials through a wet process. The wet process proceeded in the order of a preliminary separation process and a leaching process. In the preliminary separation process, water at 25°C was added to the roasted waste battery materials, and leaching was conducted for 2 hours. In the leaching process, sulfuric acid and 30% hydrogen peroxide (H₂O₂) were added to the cake generated after preliminary separation of lithium, and leaching was carried out at 80°C for 8 hours at a pH of 3.0. The concentration of metal sulfates in the leached sulfate solution was 90 g/L, and the concentration of aluminum was 1 g/L.

### Step (S2)

Sodium phosphate (Na₃PO₄) was added to the sulfate solution leached in step (S1), and sodium hydroxide (NaOH) was added for pH adjustment. The amount of sodium phosphate was 2.5% by weight based on the weight of the sulfate solution. Then, the mixture was reacted at 85°C with a pH of 3 for the sulfate solution for 4 hours to precipitate aluminum phosphate.

### Step (S3)

The aluminum phosphate precipitated in step (S2) and the sulfate solution were separated using a solid-liquid separator or a centrifuge.

### EXAMPLE 2

Valuable metals were recovered in the same manner as in Example 1, with the exception that the concentration of aluminum in the sulfate solution was 8 g/L.

### EXAMPLE 3

Valuable metals were recovered in the same manner as in Example 1, with the exception that the sulfate solution had a pH of 4, with an aluminum concentration of 8 g/L.

### EXAMPLE 4

Valuable metals were recovered in the same manner as in Example 1, with the exception that the sulfate solution had a pH of 5, with an aluminum concentration of 8 g/L.

### EXAMPLE 5

Valuable metals were recovered in the same manner as in Example 1, with the exception that the sulfate solution was added with phosphoric acid (H₃PO₄) instead of sodium phosphate (Na₃PO₄).

### EXAMPLE 6

Valuable metals were recovered in the same manner as in Example 1, with the exception that the sulfate solution was added with phosphoric acid (H₃PO₄) instead of sodium phosphate (Na₃PO₄) and contained aluminum at a concentration of 8 g/L.

### COMPARATIVE EXAMPLE 1

Valuable metals were recovered in the same manner as in Example 1, with the exception that the sulfate solution was added with hydroxide (NaOH) only, instead of sodium phosphate (Na₃PO₄) and sodium hydroxide (NaOH), and had a pH of 5.

### COMPARATIVE EXAMPLE 2

Valuable metals were recovered in the same manner as in Example 1, with the exception that the sulfate solution contained aluminum at a concentration of 3 g/L.

### COMPARATIVE EXAMPLE 3

Valuable metals were recovered in the same manner as in Example 1, with the exception that the sulfate solution contained aluminum at a concentration of 5 g/L.

### COMPARATIVE EXAMPLE 4

Valuable metals were recovered in the same manner as in Example 1, with the exception that the sulfate solution contained aluminum at a concentration of 8 g/L.

### COMPARATIVE EXAMPLE 5

Valuable metals were recovered in the same manner as in Example 1, with the exception that the sulfate solution contained metal sulfate at a concentration of 60 g/L and aluminum at a concentration of 5 g/L and had a pH of 3.

### EXPERIMENTAL EXAMPLE 1: Measurement of Loss Rate/Recovery Rate and Reaction Time in Step S2

In each Step S2 of the Examples and Comparative Examples, the loss rate of valuable metals (Ni, Co, and Mn) and the recovery rate of impurities (Al), along with the reaction time, were measured and are presented in Tables 1 and 2 below.

The loss rate of valuable metals and the recovery rate of impurities refer to the calculated values after excluding losses in the process of recovering the target metal (e.g., Ni) in a commercial form (e.g., NiSO₄). The weight of the material (and slag) containing the target metal was measured using a scale, and the concentration of the metal in the leached compound form was measured through ICP-AES spectroscopic analysis, from which the loss rates of the metals and the recovery rates of the impurities were calculated.

The reaction time for Step S2 was measured as the elapsed time from the addition of the reagent to the sulfate solution to the point when no further precipitation reaction occurred.

**TABLE 1**

| | Ex. 1 | Ex. 2 | Ex. 3 | Ex. 4 | Ex. 5 | Ex. 6 |
|---|---|---|---|---|---|---|
| Metal Sulfate Conc. (g/L) | 90 | 90 | 90 | 90 | 90 | 90 |
| Al. Conc. (g/L) | 1 | 8 | 8 | 8 | 1 | 8 |
| Additive | Na₃PO₄+ NaOH | Na₃PO₄ + NaOH | Na₃PO₄ + NaOH | Na₃PO₄ + NaOH | H₃PO₄ + NaOH | H₃PO₄ + NaOH |
| pH of Sulfate Sol'n in Step S2 | 3 | 3 | 4 | 5 | 3 | 3 |
| Ni Loss Rate (%) | 0.11 | 0.96 | 1.17 | 1.82 | 0.10 | 0.94 |
| Co Loss Rate (%) | 0.23 | 1.16 | 1.21 | 1.63 | 0.19 | 1.49 |
| Mn Loss Rate (%) | 0.41 | 1.17 | 1.67 | 2.42 | 0.36 | 1.99 |
| Al Recovery (%) | 96.7 | 99.1 | 99.7 | 99.8 | 96.6 | 99.0 |
| Time taken in Step S2 (hr) | 4 | 4 | 4 | 4 | 4 | 4 |

**TABLE 2**

| | C. Ex. 1 | C. Ex. 2 | C. Ex. 3 | C. Ex. 4 | C. Ex. 5 |
|---|---|---|---|---|---|
| Metal Sulfate Conc. (g/L) | 90 | 90 | 90 | 90 | 60 |
| Al. Conc. (g/L) | 1 | 3 | 5 | 8 | 8 |

| Additive | NaOH | NaOH | NaOH | NaOH | Na₃PO₄+ NaOH |
|---|---|---|---|---|---|
| pH of Sulfate Sol'n in Step S2 | 5 | 5 | 5 | 5 | 3 |
| Ni Loss Rate (%) | 1.47 | 5.59 | 10.9 | 18.3 | 0.91 |
| Co Loss Rate (%) | 1.08 | 1.78 | 4.47 | 10.8 | 0.22 |
| Mn Loss Rate (%) | 0.26 | 1.42 | 1.73 | 8.69 | 0.34 |
| Al Recovery (%) | 91.9 | 97.0 | 98.2 | 99.0 | 99.2 |
| Time taken in Step S2 (hr) | 8 | 8 | 8 | 8 | 12 |

As is understood from the data of Tables 1 and 2, lower loss rates of nickel, cobalt, and manganese, higher aluminum recovery (removal) rates, and reduced reaction time for Step S2 were observed in Examples 1-6 where the concentration of metal sulfates in the sulfate solution was 90 g/L or higher and phosphorus compounds were added, compared to Comparative Examples 1-4 where hydroxide sources were added instead. In addition, a significant reduction in the reaction time for Step S2 was observed in Examples 1-6, compared to Comparative Example 5 where the concentration of metal sulfates was below 90 g/L.

The technical idea of the present disclosure has been described heretofore with reference to some embodiments and examples shown in the accompanying drawings. However, it is to be understood that various substitutions, modifications and alterations may be made without departing from the technical idea and scope of the present disclosure that can be understood by those of ordinary skill in the technical field to which the present disclosure pertains. Further, it is to be understood that such substitutions, modifications and alterations fall within the appended claims.

Those of ordinary skill in the art to which the present disclosure pertains can make various substitutions, modifications and changes without departing from the scope of the present disclosure, and thus, the present disclosure is not limited by the embodiments described above and the accompanying drawings.

## Claims

1. A method for recovery of valuable metals, the method comprising the steps of:
(S1) leaching a sulfate solution from waste battery material;
(S2) adding a phosphorus compound to the sulfate solution to precipitate aluminum phosphate; and
(S3) isolating the aluminum phosphate from the sulfate solution through solid-liquid separation, wherein the sulfate solution contains metal sulfate at a concentration of 90 g/L or higher.

2. The method of claim 1, wherein the sulfate solution contains aluminum at a concentration of 1 g/L or higher.

3. The method of claim 1, wherein the metal sulfate is at least one sulfate selected from the group consisting of nickel, cobalt, manganese, lithium, copper, and aluminum.

4. The method of claim 1, wherein the step (S1) comprises a step of roasting crushed waste batteries without solvent treatment.

5. The method of claim 1, wherein the step (S1) includes a step of recovering lithium using deionized water without carbon dioxide.

6. The method of claim 1, wherein the phosphorus compound in the step (S2) is added in an amount of 0.1 % to 7.0 % by weight, based on the weight of the sulfate solution.

7. The method of claim 1, wherein the molar ratio of the phosphorus contained in the added phosphorus compound to the aluminum contained in the sulfate solution (P/Al molar ratio) is 0.92 to 1.72.

8. The method of claim 1, wherein the phosphorus compound is sodium phosphate.

9. The method of claim 1, wherein the step (S2) lasts for 2 to 8 hours.

10. The method of claim 1, wherein the step (S2) is carried out at 25°C to 95 °C.

11. The method of claim 1, wherein the sulfate solution in the step (S2) has a pH of 2.0 to 5.0.

12. The method of claim 1, wherein at least 96.0 % by weight of the aluminum contained in the sulfate solution is precipitated and removed as the aluminum phosphate.

13. The method of claim 1, further comprising a step (S4) of removing phosphorus contained in the sulfate solution.

14. The method of claim 13, wherein the sulfate solution in the step (S4) has a pH of 5.0 or higher.
